# EUROPEAN PATENT APPLICATION

(11) **EP 2 386 980 A1**
(43) Date of publication of application: **16.11.2011**
(21) Application number: 10162374.2
(22) Date of filing: 10.05.2010
(51) Int. Cl.: G06K 9/00

(54) **Serial bus fingerprint scanner with LED indicators**

(71) Applicant: Shining Union Limited, Tsuen Wan Hong Kong TWTL 353 (CN)
(72) Inventor: Wong, Kwok Fong, Tsuen Wan, Hong Kong TWTL 353 (CN); Ching, Pui Yi, Tsuen Wan, Hong Kong TWTL 353 (CN)
(74) Representative: Johansson, Lars E.

(57) **Abstract**

A serial bus fingerprint scanner includes a control module for detecting and controlling the transmission of signals, a fingerprint scanning module coupled to the control module for detecting fingerprints and transmitting fingerprint signals to the control module, a serial bus connector coupled to the control module for connecting the fingerprint scanner to a periphery device, and a light emitting diode (LED) indicator coupled to the control module to indicate operation status of the fingerprint scanner.

## Description

### FIELD OF THE INVENTION

The present patent application relates generally to a fingerprint scanning device, and particularly to a serial bus fingerprint scanner with LED indicators.

### BACKGROUND OF THE INVENTION

As science and technology develops, more and more high technology products are used in consumer's daily life. A fingerprint device is one of the high technology products that are widely used in areas such as electronic door entrances, ID verification in computing systems and banking systems, etc. However, existing fingerprint devices do not provide users with any indications as to whether the fingerprint scanning is successful or not, or what is the operation status of the fingerprint devices. Therefore, there is a need to produce an improved fingerprint device that is able to indicate the operation status of the fingerprint device and is able to indicate whether the fingerprint scanning is successful or not during the fingerprint scanning process.

The above description of the background is provided to aid in understanding a serial bus fingerprint scanner, but is not admitted to describe or constitute pertinent prior art to the serial bus fingerprint scanner disclosed in the present patent application, or consider any information as material to the patentability of the claims of the present patent application.

### SUMMARY OF THE INVENTION

A serial bus fingerprint scanner includes a control module for detecting and controlling the transmission of signals, a fingerprint scanning module coupled to the control module for detecting fingerprints and transmitting fingerprint signals to the control module, a serial bus connector coupled to the control module for connecting the fingerprint scanner to a periphery device, and one or more light emitting diode (LED) indicators coupled to the control module to indicate operation status of the fingerprint scanner.

The serial bus fingerprint scanner may include a plurality of LED indicators of different sizes arranged in a series according to the sizes.

The serial bus fingerprint scanner may include a group of first LED indicators of similar shapes, and at least one second LED indicator in another group of a different shape. The at least one second LED indicator may indicate an operating instruction or an operating position of the fingerprint scanner. The first LED indicators may be oblong in shape. The at least one second LED indicator may be in the shape of an arrow head.

The fingerprint scanning module may include a fingerprint sensor in the form of a flexible circuit. The LED indicator may be disposed separately from the flexible circuit.

The fingerprint scanning module may be a radio frequency fingerprint scanning module.

The serial bus connector may be a serial peripheral interface (SPI) bus connector.

The serial bus connector may an inter-integrated circuit (I2C) bus connector.

The serial bus connector may be a recommended standard 232 (RS-232) bus connector.

### BRIEF DESCRIPTION OF THE DRAWINGS

Specific embodiments of the serial bus fingerprint scanner disclosed in the present patent application will now be described by way of example with reference to the accompanying drawings wherein:
FIG. 1 is a block diagram of the serial bus fingerprint scanner according to an embodiment disclosed in the present patent application;
FIG. 2 is a top plan view of the serial bus fingerprint scanner according to an embodiment disclosed in the present patent application;
FIG. 3 is a circuit diagram of the serial bus fingerprint scanner;
FIG. 4 is a circuit diagram of a fingerprint sensor of the serial bus fingerprint scanner; and
FIG. 5 is a circuit diagram of a serial bus interface of the serial bus fingerprint scanner.

### DETAILED DESCRIPTION OF THE INVENTION

Reference will now be made in detail to a preferred embodiment of the serial bus fingerprint scanner disclosed in the present patent application, examples of which are also provided in the following description. Exemplary embodiments of the serial bus fingerprint scanner disclosed in the present patent application are described in detail, although it will be apparent to those skilled in the relevant art that some features that are not particularly important to an understanding of the serial bus fingerprint scanner may not be shown for the sake of clarity.

Furthermore, it should be understood that the serial bus fingerprint scanner disclosed in the present patent application is not limited to the precise embodiments described below and that various changes and modifications thereof may be effected by one skilled in the art without departing from the spirit or scope of the appended claims. For example, elements and/or features of different illustrative embodiments may be combined with each other and/or substituted for each other within the scope of this disclosure and appended claims.

It should be noted that throughout the specification and claims herein, when one element is said to be "coupled" or "connected" to another, this does not necessarily mean that one element is fastened, secured, or otherwise attached to another element. Instead, the term "coupled" or "connected" means that one element is either connected directly or indirectly to another element, or is in mechanical or electrical communication with another element.

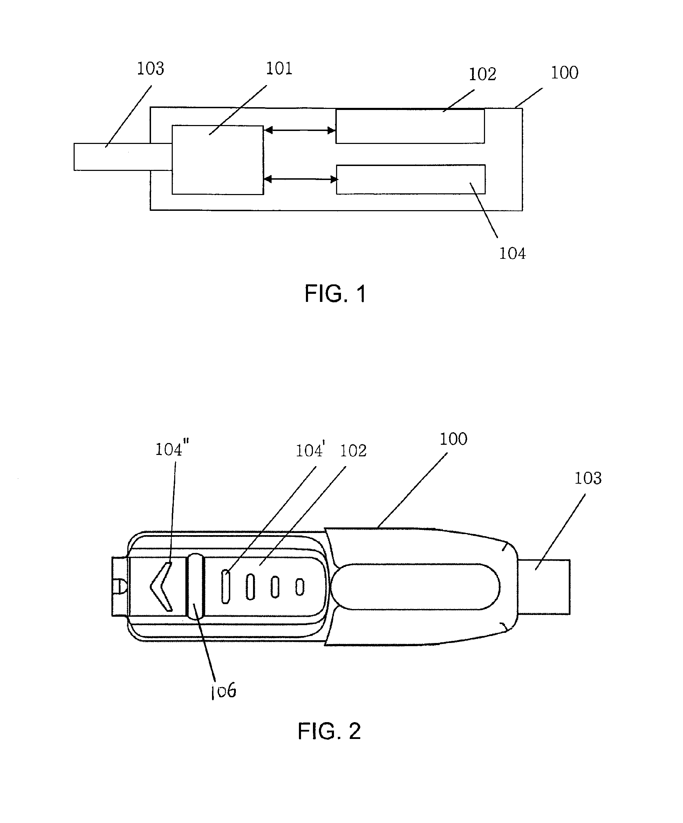

FIG. 1 shows a block diagram of the serial bus fingerprint scanner according to an embodiment disclosed in the present patent application. The serial bus fingerprint scanner may include a housing 100, a control module 101 mounted within the housing 100, a fingerprint scanning module 102 coupled to the control module 101, a serial bus plug or connector 103 coupled to the control module 101, and one or more LED indicators 104 coupled to the control module 101 to indicate the operation status and the operating instructions of the fingerprint scanner. The serial bus connector can be a serial peripheral interface (SPI) bus connector, an inter-integrated circuit (I2C) bus connector, or a recommended standard 232 (RS-232) bus connector.

The housing 100, as shown in FIG. 2, may be shaped and sized to accommodate therein the control module 101, the fingerprint scanning module 102 and the serial bus connector 103. The fingerprint scanning module 102 includes a fingerprint reader 106. The housing 100 may be made of plastic or any suitable material.

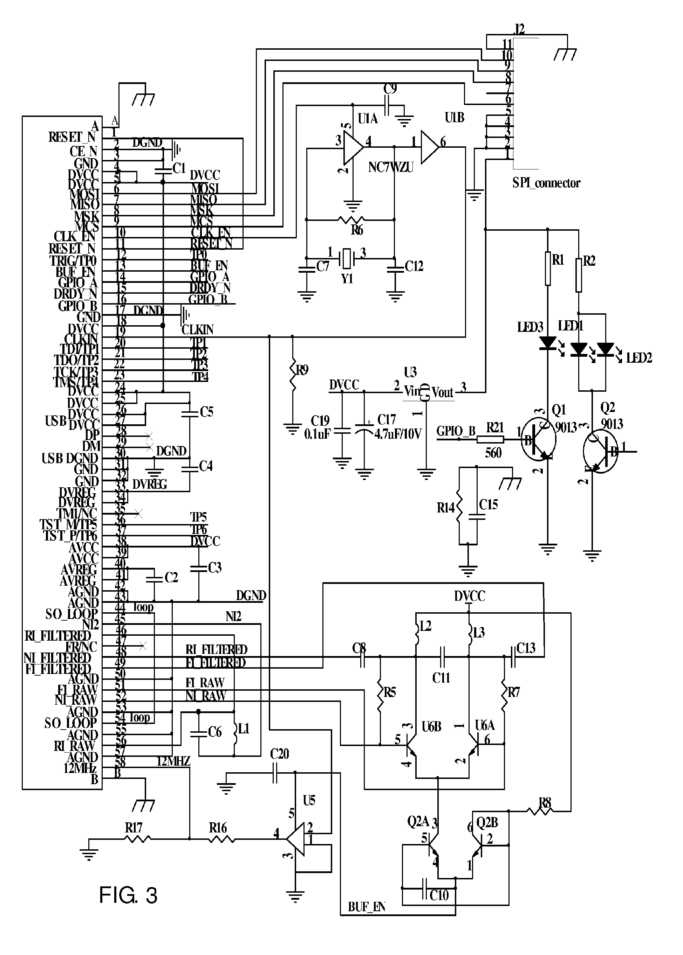

The control module 101 may be in the form of a board with electrical circuits formed thereon. The control module 101 can be fixedly mounted inside the housing 100. The control module 101 includes circuits for detecting signals and controlling the transmission of the detected signals. For example, the control module 101 can receive and process the fingerprint signals transmitting from the fingerprint scanning module 102 and send the processed fingerprint signals through the serial bus connector 103 to a periphery device such as a computer or an electronic door entrance. The control module 101 may also receive signals from the fingerprint scanning module 102 and transmit signals to the LED indicators 104 to indicate the operation status or operating instruction of the fingerprint scanner during a fingerprint scanning process. A circuit diagram of the serial bus fingerprint scanner of the present patent application is shown in FIG. 3.

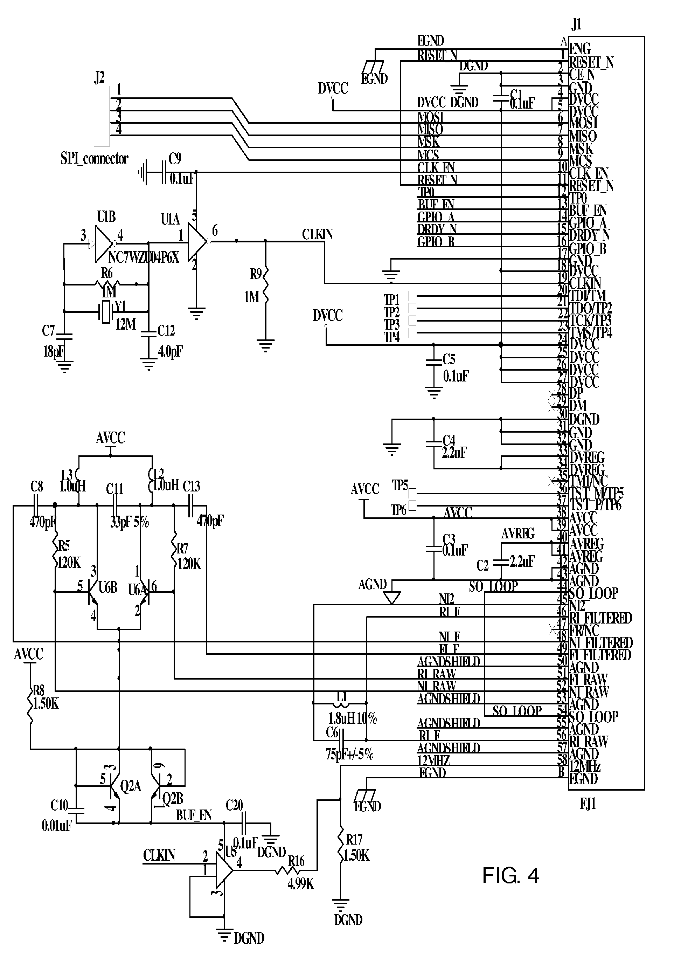

The fingerprint scanning module 102 is employed to detect fingerprints and transmit fingerprint signals to the control module 101. The fingerprint scanning module 102 may be in the form of any existing fingerprint scanning module. For example, the fingerprint scanning module 102 can be a radio frequency fingerprint scanning module. The fingerprint scanning module 102 may use a flexible circuit as a sensor for detecting the fingerprints. A circuit diagram of a fingerprint sensor of the fingerprint scanning module 102 is shown in FIG. 4. The size of the fingerprint scanning module 102 should be small enough to be accommodated within the housing 10 rendering the serial bus fingerprint scanner of the present patent application small, lightweight, compact and portable.

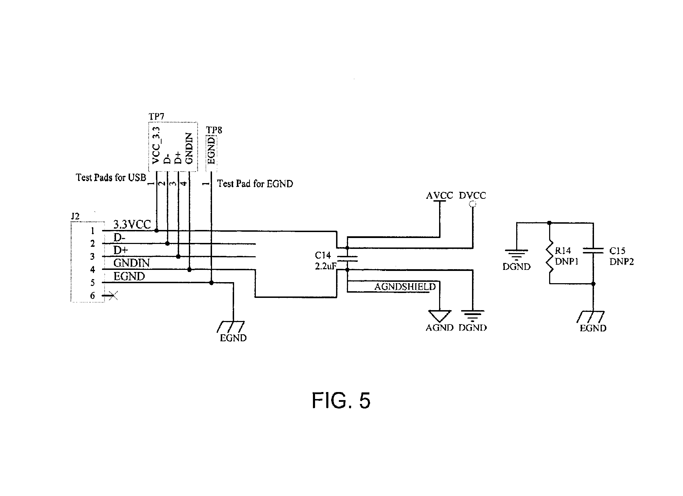

The serial bus connector 103 is coupled to the control module 101 and provides an interface between the fingerprint scanner of the present patent application and the periphery devices. A circuit diagram of the serial bus interface of the fingerprint scanner is shown in FIG. 5.

The LED indicators 104 are employed to indicate the operation status and operating instructions of the serial bus fingerprint scanner. According to the illustrated embodiment in FIG. 2, a plurality of LED indicators 104', 104" are provided on an upper surface of the housing 100 of the serial bus fingerprint scanner. The plurality of LED indicators 104', 104" can be of different shapes, sizes or colors to indicate to the user different operating conditions and different operating instructions of the serial bus fingerprint scanner during a fingerprint scanning process.

As shown in the illustrated embodiment in FIG. 2, there are four oblong-shaped LED indicators 104' with elongated sides extending transversely across the housing 100. It can be seen that the four LED indicators 104' are of similar shapes but different sizes and are arranged in a series on the housing 100 according to their sizes. The four LED indicators 104' can be used to indicate the operation status of the fingerprint scanner. For example, one of the LED indicators 104' may be lit when fingerprint scanning is not successful and two of the LED indicators 104' may be lit when fingerprint scanning is successful. One or more of the LED indicators 104' may be flashing to indicate that the fingerprint scanning is in progress. The lights of all of the LED indicators 104' may be switched off to indicate the completion of the fingerprint scanning process.

The LED indicators 104' may be in different colors to indicate different operating conditions of the fingerprint scanner. For example, the LED indicators 104' may be lit in green color when the fingerprint scanning is successful and in red color when the fingerprint scanning is not successful.

In addition to the four LED indicators 104', there is one LED indicator 104" in the shape of an arrow head or a triangular bracket pointing at one end of the housing 100. This LED indicator 104" can be used to indicate operating instructions or operating position on the fingerprint scanner. For example, the LED indicator 104" can be lit in green color to indicate that the fingerprint scanner is in its "on" position ready for fingerprint scanning, or the LED indicator 104" can be used to point at a position at the end of the housing 100 where a user can access a fingerprint scanning surface of the fingerprint scanner. The user can then place his/her finger on the fingerprint reader 106 to start the fingerprint scanning process.

It can be seen that there are two groups of LED indicators which may have different shapes, sizes or colors to indicate different operating conditions, instructions or positions of the fingerprint scanner. In the illustrated embodiment, the first group of LED indicator, namely the LED indicator 104", is located in a region near one end of the housing 100 opposite to the end where the serial bus connector 103 is located. The second group of LED indicators, namely the LED indicators 104', is located in a region between the two ends of the housing 100. It is appreciated that the LED indicators 104', 104" should be disposed separately from the flexible circuit which detects fingerprints on the fingerprint scanning surface of the fingerprint scanner so that the LED indicators 104', 104" can be visible by a user during the scanning process.

While the serial bus fingerprint scanner disclosed in the present patent application has been shown and described with particular references to a number of preferred embodiments thereof, it should be noted that various other changes or modifications may be made without departing from the scope of the appending claims.

## Claims

1. A serial bus fingerprint scanner comprising:
a control module for detecting and controlling the transmission of signals;
a fingerprint scanning module coupled to the control module for detecting fingerprints and transmitting fingerprint signals to the control module;
a serial bus connector coupled to the control module for connecting the fingerprint scanner to a periphery device; and
one or more light emitting diode (LED) indicators coupled to the control module to indicate operation status of the fingerprint scanner.

2. The serial bus fingerprint scanner as claimed in claim 1, comprising a plurality of LED indicators of different sizes arranged in a series according to the sizes.

3. The serial bus fingerprint scanner as claimed in claim 1, comprising a group of first LED indicators of similar shapes, and at least one second LED indicator in another group of a different shape.

4. The serial bus fingerprint scanner as claimed in claim 3, wherein the at least one second LED indicator indicates an operating instruction or an operating position of the fingerprint scanner.

5. The serial bus fingerprint scanner as claimed in claim 3, wherein the first LED indicators are oblong in shape.

6. The serial bus fingerprint scanner as claimed in claim 3, wherein the at least one second LED indicator is in the shape of an arrow head.

7. The serial bus fingerprint scanner as claimed in one of claims 1-6, wherein the fingerprint scanning module comprises a fingerprint sensor in the form of a flexible circuit.

8. The serial bus fingerprint scanner as claimed in claim 7, wherein the LED indicator is disposed separately from the flexible circuit.

9. The serial bus fingerprint scanner as claimed in one of claims 1-6, wherein the fingerprint scanning module is a radio frequency fingerprint scanning module.

10. The serial bus fingerprint scanner as claimed in one of claims 1-6, wherein the serial bus connector comprises a serial peripheral interface (SPI) bus connector.

11. The serial bus fingerprint scanner as claimed in one of claims 1-6, wherein the serial bus connector comprises an inter-integrated circuit (I2C) bus connector.

12. The serial bus fingerprint scanner as claimed in one of claims 1-6, wherein the serial bus connector comprises a recommended standard 232 (RS-232) bus connector.
